# EUROPEAN PATENT APPLICATION

(11) **EP 2 541 361 A2**
(43) Date of publication of application: **02.01.2013**
(21) Application number: 11747781.0
(22) Date of filing: 18.02.2011
(51) Int. Cl.: G05D 16/06

(54) **GAS REGULATOR WITH NON-METAL COMPONENTS (VARIANTS)**

(30) Priority: 25.02.2010 RU 2010106437
(71) Applicant: Zakrytoe Aktsionernoe Obschestvo "Oksikod", Leningradskaya obl. 188380 (RU)
(72) Inventor: VOROTYNETS, Anatoly Vasilievich, St. Petersburg 194017 (RU); GURYLEV, Aleksandr Sergeevich, St. Petersburg 195279 (RU)
(74) Representative: Anohins, Vladimirs
(86) International application number: PCT/RU2011/000092
(87) International publication number: WO 2011/105932

(57) **Abstract**

The gas regulator with non-metal components comprises a membrane (4), a body (1), an adjustment screw (2), and a cap (3) made of a non-metal thermoplastic material and equipped with molded threads. The body (1) is connected to the cap (3) via a larger-diameter thread (6) and a smaller-diameter thread (5). The molded threads (5, 6) on the cap (3) are of the same pitch "h" and are arranged coaxially. The cap (3), the adjustment screw (2), and the body (1) are made of glass-reinforced polyamide and equipped with molded threads.

## Description

The present invention relates to devices for automatic pressure adjustment and can be applied in different industries for reducing and adjusting pressure (flow rate) of various gases (oxygen, acetylene, propane etc.).

There is known in the art a gas regulator that comprises non-metal elements (particularly, a membrane) and metal elements with threads, including a body, an adjustment screw, and a cap (see DE 831050, G05D 16/06, 1952 and RU 2117325, G05D 16/06, 1998).

The main structural parts of gas regulators are made of metal because of operating conditions thereof. Gas regulators have small overall dimensions (threads diameters no more than 60 mm) are manufactured serially and used with various gases (including aggressive gases) at high pressures under various environmental conditions, therefore, it is required that they have a high mechanical strength and are physically and chemically resistant to internal and external impacts.

The metal parts of gas regulators are produced by mechanical processing of stamped (or molded) blanks made of expensive metals (mostly of copper or aluminum alloys), which makes the gas regulators expensive.

As to threads, they are always cut on the metal parts of gas regulators by mechanical processing.

It is virtually impossible to produce molded or stamped blanks with threads (without mechanical processing) for serial-produced regulators with threads diameters of no more than 60 mm.

In the prior art, the cap of a gas regulator is often made of two parts, one of which being an insert separately produced as a threaded plug matching with an adjustment screw.

The outer side of the cap is normally painted in a color corresponding to the gas (oxygen - blue, propane - red, acetylene - white).

The closest to the present invention in terms of its technical essence is the gas regulator disclosed in DE 10062789, G05D 16/06, 2002, which comprises a membrane and threaded parts including a body, an adjustment screw, and a cap.

Herewith, the body is made of plastic, and the cap is made of metal.

The metal cap has two threads of different diameters. The thread of a larger diameter is used to connect the cap with the body, and the thread of a smaller diameter is used for installation of the adjustment screw.

Due to that such a complicated and large part of the gas regulator as the body is made of plastic the material costs involved in the production of such gas regulators are significantly reduced.

The purpose of DE 10062789 is to reduce the material costs involved in the production of the gas regulators designated for regulating aggressive gases, for which expensive metals (alloys) are traditionally used.

The purpose of DE 10062789 is achieved by replacing the expensive metal body by a cheaper plastic one.

However, such a replacement creates a complicated technical problem: it is impossible to obtain high-quality surfaces, particularly, high-quality threads (that are necessary for gas regulators) on plastic by mechanical processing.

It is difficult to obtain a high-quality clean and solid surface on plastic by mechanical processing because of a high plasticity and viscosity of polymers that form the basis of plastics.

It is virtually impossible to obtain a high-quality surface by boring, as well as by subsequent threading, which is conditioned by a very low thermal conductivity of plastic.

When holes to be threaded are bored, the plastic becomes overheated in the cutting zone (because of poor heat transfer from the zone due to a low thermal conductivity of plastic), which leads to appearing of defects, such as striation, discontinuity flaws, surface ruptures etc., on the mechanically processed surface.

When the hole is subsequently threaded, an additional buckling and distortion of the thread profile take place. The surface roughness of such thread is extremely high (more than 50.0 µm). The surface of the thread turns becomes physically inhomogeneous, with deviations of the thread geometry from nominal.

Such surface defects significantly decrease the strength of thread connections and, thus, are intolerable in critical items (particularly in the gas regulators that operate under high pressures).

The structure of the gas regulator according to DE 10062789 involves two precise coaxially arranged threads on the cap, that are capable of carrying high loads.

Due to the technical reasons mentioned above, the cap of this gas regulator is made of metal, thus, the purpose - reducing material costs involved in the production of gas regulators - is not completely achieved.

Thus, in manufacturing the gas regulator according to DE 10062789, two technological conversions are needed: one for processing a body blank of plastic and the other for processing a cap cast of metal, which requires using two groups of different processing equipment, which in turn leads to a significant increase of the production expenses.

The above-identified closest prior art document suggests using the following plastic materials: polyolefin, polyacetal, polyester or polyamide, polypropylene, polyetheretherketone, polyvinylidene fluoride, and polytetrafluoroethylene.

It is known that polyolefins (particularly polyethylene) have a very low rigidity. Moreover, they are prone to a very fast ultraviolet aging.

Polypropylene is not frost-resistant (can be used only at temperatures not lower than -5°C).

Polyacetal is not resistant to acid environment. Besides, it easily decomposes when exposed to ultraviolet radiation.

Polyester is not resistant to ultraviolet radiation, in the air environment, it loses 40% of its strength per year of operation.

Normal polyamide becomes saturated with moisture up to 8% when operating outdoors, which leads to losing its strength during its all-weather outdoor operation. Besides, it is not resistant to the solar ultraviolet radiation.

Polyvinylidene fluoride is not chemically resistant to ketones, which makes it virtually impossible to use it in acetylene gas regulators. In addition, it is relatively expensive.

Polytetrafluoroethylene has very low strength characteristics, which makes it virtually unusable as a structural material.

Polyetheretherketone is free of disadvantages typical for the most of polymers, but it is extremely expensive (in a single item, its cost is comparable with that of the copper alloys). Besides, the processes of polyetheretherketone injection molding are not properly developed.

### Disclosure of the essence of invention

The technical result of the present invention consists in providing a gas regulator, the design concept of which allows to reduce costs involved in manufacturing such gas regulators, with improving the quality, reducing the mass, and increasing the production effectiveness thereof at the same time.

The above technical result of the present invention is achieved by providing a gas regulator with non-metal parts comprising a membrane and threaded parts including a body, an adjustment screw, and a cap.

Herewith, the cap is made of a non-metal thermoplastic material with molded threads of different diameters, so that the body is connected to the cap by a thread of a larger diameter, the adjustment screw is installed in the cap by a thread of a smaller diameter, and the threads on the cap are molded, are of the same pitch, and are arranged coaxially.

At least two parts of the gas regulator are made of a non-metal thermoplastic material and are equipped with molded threads which are of the same pitch and are arranged coaxially.

The non-metal parts of the gas regulator are made of glass-reinforced polyamide with polyamide content of 60-80%.

The fact that the cap of the gas regulator is made of a non-metal thermoplastic material and is equipped with coaxially arranged molded threads of different diameters but of the same pitch makes it possible to obtain a high-quality cap cast with molded threads on its surface by a common process of injection molding using an injection molding machine.

Commercial injection molding machines with a dismountable mold, in which the cap cast is formed, may be used for the production of such caps.

The mold comprises a set of plates and a threaded core formed as a solid of revolution, on which threads of different diameters but of the same pitch are made corresponding to the molded threads on the cap surface.

The threads on the threaded core and the revolution surface of the latter are arranged coaxially.

The cap solid with threads thereon is formed from a liquid melt of a thermoplastic material in the mold under pressure in the closed position of the mold. Upon the solidification of the thermoplastic material the mold is opened.

The opening of the mold is performed by progressive rotation of the threaded core along its axis with a pitch, equal to the pitch of threads on the cap.

Thereby, the threads of the threaded core are screwed out from the threads on the cap surface.

Since the coaxially arranged threads on the surface of the threaded core are of the same pitch, the molded threads on the surface of the cap formed from the thermoplastic material do not break down when opening the mold.

Thus, the cap design allows manufacturing it with two molded threads at a single cycle of casting, which is unachievable in the prior art.

This design concept of the gas regulator allows to obtain a regulator cap that does not require any further mechanical processing of important surfaces (threads, sealing planes etc.).

In addition, this design concept of the gas regulator allows to use the same technologies (thermoplastic injection molding) of high capacity and standard equipment (injection molding machines) for manufacturing the threaded parts of the gas regulator including the body, the adjustment screw, and the cap, which reduces the production costs significantly.

Using glass-reinforced polyamide with polyamide content of 60-80% as the thermoplastic material allows to produce strong and environment-resistant parts (the cap, the body, and the adjustment screw) made of a thermoplastic material and equipped with molded threads.

The quality of a molded thread on the cap made of a thermoplastic material depends on the quality of the corresponding thread on the threaded core and the choice of the thermoplastic material.

The threaded core is made of a high-quality wear-resistant chisel alloy-treated steel.

A precise thread on the threaded core is cut by mechanical processing with subsequent grinding.

The roughness of the thread surface on the threaded core is not more than 0.63 µm. Accordingly, the roughness of the surface of the molded thread on the cap is within the same limits.

Herewith, the molded thread has no defects that typically appear when a plastic material is threaded mechanically, due to which the strength characteristics of the thread are improved.

All parts of the gas regulator that have threads and are made of thermoplastic materials can be produced by a similar process (injection molding).

Herewith, the molding precision and the surface roughness characteristics will be very high.

The material used, which is glass-reinforced polyamide with polyamide content of 60-80%, has the following characteristics:
- a high resistance to the solar ultraviolet;
- a high rigidity (in comparison with other plastics);
- a wide range of operation temperatures, allowing to use it outdoors in any climatic zone (from -50°C to +70°C);
- a high chemical resistance (including resistance to ketones and acid environments), as well as chemical stability;
- a low moisture absorption (less than 1 %);
- a high strength (providing necessary safety margins for the parts of the gas regulator);
- a high-quality surface finish of molded surfaces corresponding to the surface finish of the mold;
- a low cost (20-25 times cheaper than polyetheretherketone);
- a low specific mass, namely, within a range of 1.3-1.46 g/cm³ (two times lighter than aluminum alloys, 5-6 times lighter than steel or brass);
- good antistatic properties;
- a high wear-resistance of the threads;
- miscibility with dyes which enables to obtain items of a desired color;
- a high resistance to sparks and fire (for short time, resists a touch of a wire heated to a temperature about 900°C) - due to the glass-reinforcing.

The abovementioned properties of such a glass-reinforced polyamide lead to the conclusion that it is the most preferable casting a non-metal structural material for manufacturing parts of gas regulators, primarily, parts with threads.

Glass-reinforced polyamide becomes fragile as the content of polyamide therein decreases.

Glass-reinforced polyamide loses its rigidity and other useful properties as the content of polyamide therein increases.

The optimal content of polyamide in glass-reinforced polyamide is 60-80%.

In some cases, it is possible to use glass-reinforced polyamide that contains 55-85% of polyamide (by volume). It is possible to add other than glass fillers to the glass-reinforced polyamide that change the properties of the material, also, dyes can be added. In this case, it is possible to use glass-reinforced polyamide that contains 3-55% of any other than glass filler(s) (by mass) in the finished material.

### Brief description of drawings

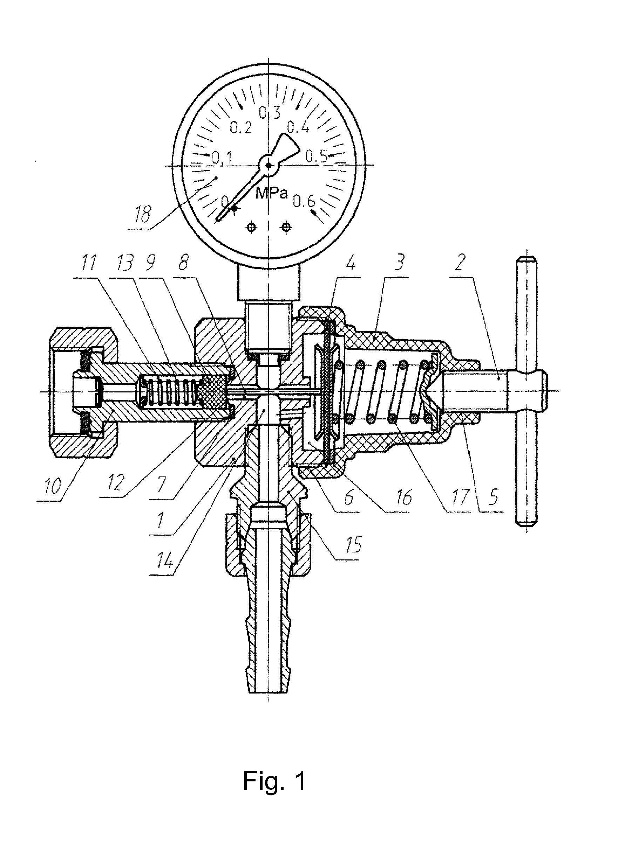

The essence of the present invention is disclosed by the following description and drawings, in which
Fig. 1 shows a gas regulator according to one embodiment of the present invention with an outlet pressure gauge, union nuts at inlet and outlet pipes and a nipple.

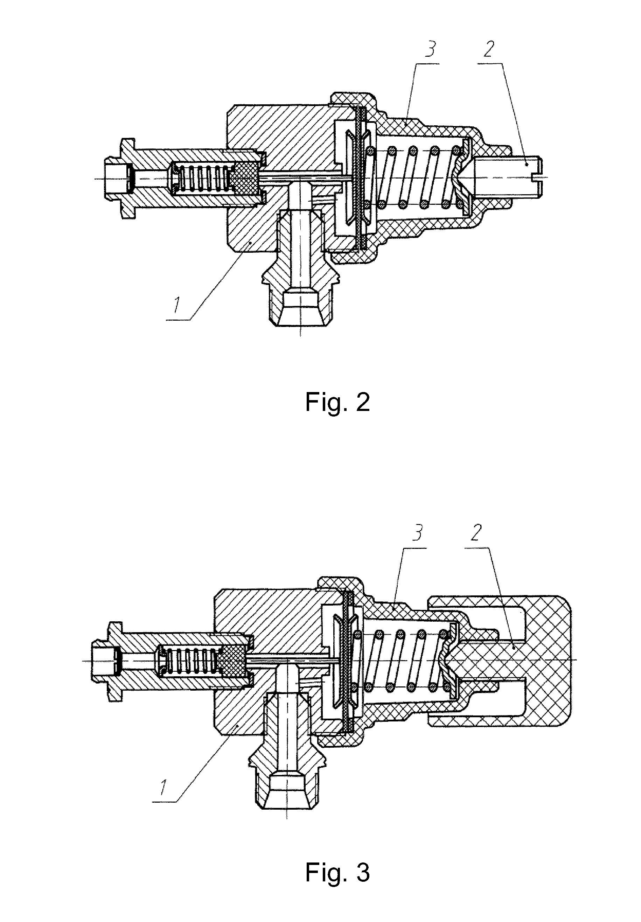

Fig. 2 shows a gas regulator according to another embodiment of the present invention which does not involve any pressure gauge, union nuts or nipple, but is equipped with a shortened metal adjustment screw.
Fig. 3 shows a gas regulator according to still another embodiment of the present invention which does not involve any pressure gauge, union nuts or nipple, but is equipped with an adjustment screw made as a monolithic molded flywheel made of a non-metal thermoplastic material.

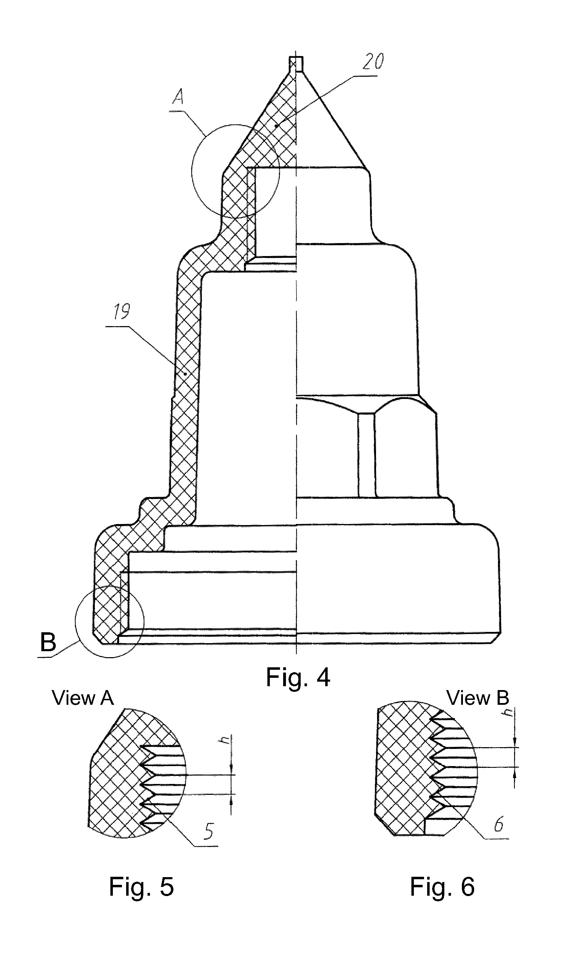

Fig. 4 shows a cap cast made of a non- metal thermoplastic material with molded threads and a cast gate.
Fig. 5 shows view A of Fig. 4.
Fig. 6 shows view B of Fig. 4.

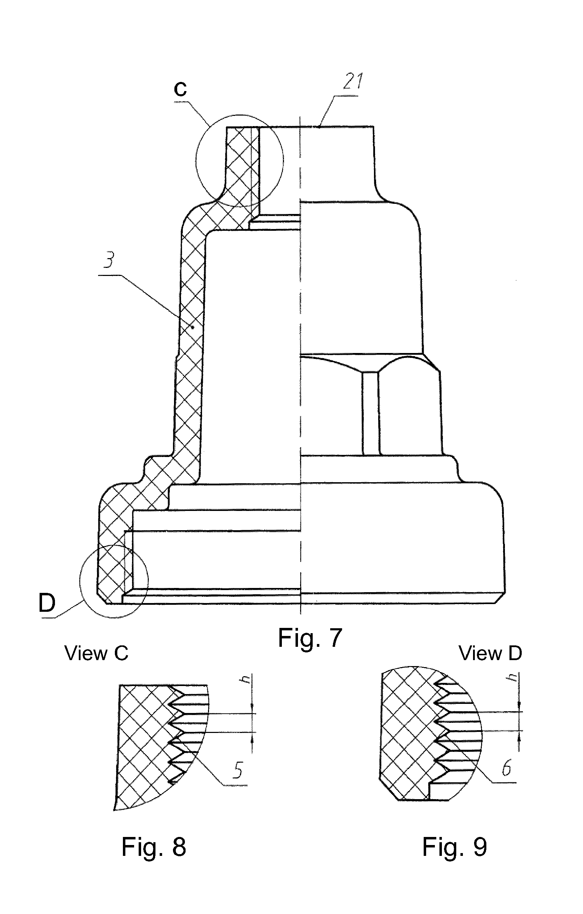

Fig. 7 shows a cap made of a non-metal thermoplastic material and equipped with molded threads thereon.
Fig. 8 shows view C of Fig. 7.
Fig. 9 shows view D of Fig. 7.

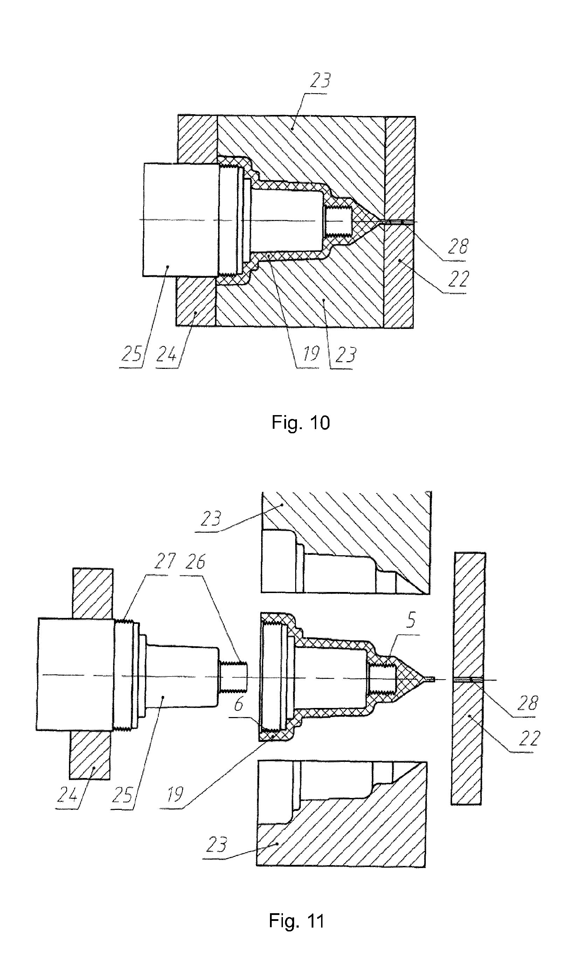

Fig. 10 schematically shows a mold for molding a cap in its closed state.
Fig. 11 schematically shows a mold for molding a cap in its opened state.

### Detailed description of invention

The gas regulator contains a body 1, an adjustment screw 2, a cap 3 made of a non-metal thermoplastic material, and a membrane 4.

Herewith, the cap 3 is equipped with inner molded threads 5 and 6 of different diameters but of the same pitch "h".

The body 1 is connected to the cap 3 by the thread 6 of a larger diameter, and the adjustment screw 2 is rotatably installed in the cap 3 by the thread 5 of a smaller diameter.

A central channel 7 is made in the body 1, in which channel a push rod 8 is installed that interacts with a shut-off unit 9 at one end and with the membrane 4 at the other end.

An inlet pipe 10, within which a high-pressure chamber 11 is formed and the shut-off unit 9 that is pressed to a seat 12 by a spring 13 is placed, is nested in the body 1.

The seat 12 is formed as a cone-shaped ledge on the body 1, within which the central channel 7 passes.

In the body 1, an outlet channel 14 is provided which is connected to an outlet pipe 15.

In the body 1, a low-pressure chamber 16 limited by the membrane 4, is provided.

A set spring 17 is placed between the adjustment screw 2 and the membrane 4 within the cap 3.

In a continuation of the outlet channel 14, a pressure gauge 18 is mounted. The basic embodiment of the gas regulator according to the present invention is a gas regulator with a pressure gauge, a union nut on the inlet pipe 10, a union nut on the outlet pipe 15 and a nipple.

An alternative embodiment is a gas regulator without a pressure gauge, without union nuts and nipple, with a shortened metal adjustment screw 2.

The adjustment screw 2 can be made as a monolithic cast flywheel of a non-metal thermoplastic material. On a cap cast 19, the molded threads 5 and 6 are made. Both threads are of the same pitch "h".

On that face of the cap cast 19 where said smaller diameter thread 5 is formed, a cast gate 20 is provided.

The cap 3 with the molded threads 5 and 6 is obtained after said cast gate 20 is mechanically removed. Both threads on the cap are of the same pitch "h."

On that face of the cap 3 where the smaller diameter thread 5 is formed, a mechanically processed surface 21 is provided that appeared after the cast gate 20 was mechanically removed.

A mold for the formation of the cap cast 19 consists of a front plate 22, a middle plate 23 consisting of two split followers movable away from each other, and a rear movable plate 24, within which a threaded core 25 is rotatably installed.

On the threaded core 25, external threads 26 and 27 of the same pitch "h" corresponding to the threads 5 and 6 on the cap cast 19, are formed.

On the front plate 22 a hole 28 for injecting a thermoplastic material into the mold is provided.

Alternatively, a multiple seat mold may be used to provide simultaneously producing multiple cap casts.

Alternatively, two parts of the gas regulator (e.g., the cap 3 and the body 1, or the cap 3 and the adjustment screw 2) can be made of a non-metal thermoplastic material and equipped with molded coaxially arranged threads with the same pitch "h."

Alternatively, the main parts of the gas regulator (the cap 3, the body 1, the inlet pipe 10, and the adjustment screw 2) can be made of a non-metal thermoplastic material and equipped with molded coaxially arranged threads with the same pitch "h."

The non-metal parts of the gas regulator are made of glass-reinforced polyamide, that contains 65-75% of polyamide.

The gas regulator operates as follows:
When the adjustment screw 2 is rotated, the set spring 17 acts on the membrane 4 and, through it, on the push rod 8, which moves the shut-off unit 9 from the seat 12, overcoming the force generated by the spring 13 and opening a gap between the shut-off unit 9 and the seat 12, through which gap the regulated gas flows from the high-pressure chamber 11 through the central channel 7 to the low-pressure chamber 16, herewith, the gas pressure reduces to a level set by the force generated by the spring 17.

Under a low pressure, the gas flows to the outlet channel 14 and then to a consuming unit (e.g., a gas cutter) through the outlet pipe 15.

Thus, a required outlet pressure of the regulated gas is set by progressive rotation of the adjustment screw 2 along the thread 5 in the cap 3.

The impermeability of the low-pressure chamber 16 of the gas regulator is secured by squeezing the material of the membrane 4 when assembling the gas regulator (when screwing the cap 3 on the body 1) and tightening the larger diameter thread 6.

On the outer side of the cap 3, a hexahedron-shaped influx for a wretch is made in order to make assembling the gas regulator easier.

A mechanically processed surface 21 on the cap 3 appeared after removing the cast gate 20 does not contact any part of the gas regulator.

The requirements for the quality of the surface 21 may be minimal, in contradistinction to those for the surfaces of threads 5 and 6 and the other surfaces of the cap.

A cast for the cap 3 is formed in a mold of an automatic molding machine.

A melted thermoplastic material is injected through the hole 28 of the front plate 22 under pressure, the material filling an internal cavity of the mold, thereby forming the body of the cap cast 19 with threads thereon.

Upon the solidification of the body of the cap cast 19 in the mold, the threaded core 25 is screwed out of the cap cast 19, passing through the rear plate 24.

After that the mold is opened first by moving the rear plate away from the front plate, and then the split followers of the middle plate 23 are moved away from each other releasing the cap cast 19.

Other variations of the mold design, as well as other sequence of the process operations, are possible.

In order to improve the productivity of the process, the mold is made water-cooled.

If the cap cast 19 is formed according to this method, the roughness of its inner and outer surfaces (including thread surfaces) equals to 0.08-0.63 µm, and its dimensions quality is within the grade of accuracy between 10 and 12 that makes unnecessary any further mechanical processing.

All the main parts of the gas regulator (including the body and the adjustment screw) can be manufactured in a similar way.

### Industrial applicability

The technical result consisting in the reduction of the expenses involved in manufacturing the gas regulators and the improvement of their manufacturability is achieved due to the combination of the following distinctive features of the invention:
a non-metal thermoplastic material, namely glass-reinforced polyamide, is used for manufacturing some parts of the gas regulator;
molded threads are formed on the parts; and
the cap is equipped with molded coaxially arranged threads with the same pitch thereon. At least two parts of the gas regulator are made of a non-metal thermoplastic material and equipped with coaxially arranged molded threads of the same pitch.

The production cost is reduced due to the reduction of operations of mechanical processing, reduction of the cost of the materials used, and reduction of the number of technological conversions.

The manufacturability of the gas regulator is improved due to the reduction of the number of technological conversions and the riddance of operations of mechanical processing.

The technical result consisting in the reduction of the mass of the gas regulators is achieved due to that a non-metal thermoplastic material, namely glass-reinforced polyamide, is used for manufacturing some parts of the gas regulator. The mass of the gas regulator can be made several times less, because plastics have specific masses 2 to 6 times lower than metals.

The technical result consisting in the improvement of the product quality is achieved due to that a glass-reinforced polyamide with polyamide content of 60-80% is used.

A high quality of the products is provided due to good operational properties of the material used.

Apart from the known properties of glass-reinforced polyamide, translation threads formed thereon (in contradistinction to threads on metals) do not stick at freezing temperatures, which prevents freezing the screw to the cap at low temperatures.

The following variations of the present invention are possible:
- The cap of the gas regulator is equipped with an external molded thread.
- The body of the gas regulator is equipped with an internal molded thread.
- The adjustment screw of the gas regulator is equipped with an internal molded thread.
- Polycarbonate (PC), polysulfone (PS), polyetheretherketone (PEEK), Polyamideimide (PAI), polybenzimidazole (PBI), or polyvinylidene fluoride (PVDF) is used as the non-metal thermoplastic material.
- The material known as "Armamide" is used as the non-metal thermoplastic material.
- Composite materials are used as structural materials for the body, adjustment screw and other parts.
- Metal surfaces of the body and other parts are coated with non-metal materials.
- Non-metal surfaces of the body and other parts are coated with metal materials.
- Non-metal surfaces of the body and other parts are coated with other non-metal materials.
- Molded non-metal parts (including the cap, the body, the screw etc.) are reinforced with metals or other materials.
- Colored plastics are used according to the type of the gas used (for oxygen - blue, for propane - red, for carbon dioxide - black etc.).
- The body of the gas regulator is made of metal.
- The adjustment screw of the gas regulator is made of metal.
- Three or more molded threads including coaxially arranged ones are formed on the surfaces of the parts of the gas regulator.
- The molded threads on the parts of the gas regulator, including coaxially arranged threads, have different pitches.
- The molded threads on the parts of the gas regulator, including coaxially arranged threads, are double-start or multiple-start.
- The molded threads on the surfaces of parts of the gas regulator are formed with different profiles (including metric, inch, pipe, conical, trapezoid etc. threads).
- The gas regulator has two or three pressure gauges.
- The gas regulator has two or three stages of regulation.
- The gas regulator provides a radial gas supply in relation to the membrane.
- The pipe of the gas regulator is made of a non-metal thermoplastic material and equipped with a molded thread.
- The union nut of the gas regulator is made of a non-metal thermoplastic material and equipped with a molded thread.
- The nipple of the gas regulator is made of a non-metal thermoplastic material.
- A trihedral-shaped, square-shaped or polyhedron-shaped molded influx for a wretch is provided on the cap of the gas regulator.
- The adjustment screw of the gas regulator is made of a non-metal thermoplastic material cast-in-block, including as a handle-shaped or flywheel-shaped screw.

## Claims

1. A gas regulator with non-metal parts comprising a membrane (4) and threaded parts, including a body (1), an adjustment screw (2), and a cap (3) made of a non-metal thermoplastic material and equipped with molded threads (5,6) of different diameter, wherein the body is connected to the cap by the thread (6) of a larger diameter, the adjustment screw (2) is connected with the cap by the thread (5) of a smaller diameter, and said molded threads on the cap (3) are of the same pitch "h" and are arranged coaxially.

2. The gas regulator according to claim 1, wherein the adjustment screw (2) is made of a non-metal thermoplastic material and equipped with a molded thread.

3. The gas regulator according to claim 1, wherein the body (1) is made of a non-metal thermoplastic material and equipped with a molded thread.

4. A gas regulator with non-metal parts comprising a membrane (4) and threaded parts, including a body (1), an adjustment screw (2), and a cap (3), wherein at least two parts are made of a non-metal thermoplastic material and equipped with molded arranged threads.

5. The gas regulator according to claim 4, wherein said parts of the gas regulator are made of glass-reinforced polyamide with polyamide content of 60-80%.
